# EUROPEAN PATENT SPECIFICATION

(11) **EP 0 843 971 B1**
(45) Date of publication and mention of the grant of the patent: **10.12.2003**
(21) Application number: 97203572.9
(22) Date of filing: 17.11.1997
(51) Int. Cl.: A22C 21/06, A22B 5/00

(54) **Device for cutting out the vent of the carcass of poultry, and/or opening it during a slaughtering process.**
Vorrichtung zum Herausschneiden und/oder Öffnen des Afters bei Geflügel während des Schlachtens
Dispositif pour enlever et/ou ouvrir l'anus de volailles en cours d'abattage

(30) Priority: 20.11.1996 NL 1004576
(43) Date of publication of application: 27.05.1998
(73) Proprietor: SYSTEMATE HOLLAND B.V., NL-3281 AC Numansdorp (NL)
(72) Inventor: van der Ree, Arie Frans, 3271 CP Numansdorp (NL); Schmidt, Michel, 3054 NM Rotterdam (NL); Van Vark, Leendert Isaac, 3274 GJ Puttershoek (NL)
(74) Representative: Ferguson, Alexander

(56) References cited:
- EP-A- 0 460 740
- FR-A- 2 332 710
- US-A- 2 795 815
- US-A- 4 117 570
- US-A- 4 155 146
- US-A- 4 266 322
- DATABASE WPI Section Ch, Week 198546 Derwent Publications Ltd., London, GB; Class D12, AN 1985-288080 XP002123685 & SU 1 153 868 A (MOSK KOMPLES POULT), 7 May 1985 (1985-05-07)

## Description

The invention relates to a device for cutting out the vent of a carcass of poultry during a slaughtering process, comprising a hollow cylindrical knife having a cutting edge at its distal end, and a vent centring pin arranged within there, extending parallel to the centre axis of the knife.

Devices of this kind are also called vent probes and work in cooperation with means for holding the carcass in the correct position for the vent probe. The latter means usually comprise an overhead conveyor with trolleys provided with leg shackles, on which the hanging carcasses are transported along an arrangement with vent probes. In the process of cutting loose the vent the centring pin is first moved downwards until in the vent opening of the carcass. This centring pin can be moved up and down in axial direction within the hollow cylindrical knife, so that initially, during centring with the help of the centring pen, the knife can be held above the vent. After the centring pin has been forced sufficiently far down the rectum contiguous to the vent opening the driving of the cylindrical knife is activated and the knife is moved downwards to cut loose the vent around the orbicular muscle from the area of skin of the carcass around it. The knife moves axially till near or beyond the distal end of the centring pin. By means of suitable means the orbicular muscle area is subsequently detained in the vent probe and by pulling out the vent probe the vent can be pulled upwards out of the carcass, the rectum being pulled along/stretched some distance. After that the vent probe is operated to let go of the vent and rectum, after which these remain outside of the carcass.

A device working in such a way and as described in the preambles of claims 1 and 14 is known from US-A-4,155,146. This known vent probe has a hollow cylindrical knife with a sheer circular cutting edge and arranged within there a centring pin which is provided with a helical rib. With this helical rib it is effected that the orbicular muscle during rotation of the centring pen is pulled upwards somewhat in the direction of the knife. Furthermore the rib or centring pin which is rotated against the rotation direction of the knife, realizes that the vent is detained against turning along with the rotating and cutting knife. The rotation speed of the centring pin is slow in comparison with the speed of the knife. When removing the vent after cutting loose, the vent area is detained between the rib or the centring pin and the knife.

From EP-A-0.460.740 another kind of device for cutting out the vent of the carcass of poultry is known. In this device the centring pin is provided with a truncated conical thickened end, behind which the orbicular muscle will end up -after inserting the centring pen into the vent-. The thickened head is provided with bores for fixing pins, which are placed within the knife. When the knife has cut the vent the centring pin is moved upwards again. With that the vent is pierced near the orbicular muscle by the fixing pins and fixed. The cylindrical knife has a cutting edge, which is substantially circular but provided with inclined notches, so that cutting teeth are formed which point in the rotation direction.

In the slaughtering industry automating the slaughtering treatments and a rise in treatment frequency is constantly aimed at, but in such a way that this does not entail a treatment which is more inaccurate or sensitive to failure. The invention now has the object to provide a device of the kind mentioned in the preamble, with which a treatment is possible which is faster or more accurate or less sensitive to failure.

To this end the invention provides from a first aspect a device for cutting out the vent of the carcass of poultry during a slaughtering process, comprising a hollow cylindrical knife having a cutting edge at its distal end, a vent centring pin arranged within there, and extending parallel to the centre axis of the knife, means for rotatingly driving the knife and means for rotatingly driving the centring pin in opposite direction, the cutting edge of the knife having inclined cutting edge portions, which include an obtuse angle opening in the rotation direction of the knife, with the proximal direction component of the centre axis of the knife, as seen in a projection plane which contains the centre axis of the knife, and the centring pin being provided with elevations protruding from its surface, having engaging surfaces which are arranged in helical line, which helical line encloses an obtuse angle opening in a rotation direction opposite to that of the knife with the proximal direction component of the centre axis of the knife, as seen in the projection plane.

From another aspect the invention provides a device for cutting out the vent of the carcass of poultry during a slaughtering process, comprising a hollow cylindrical, rotatingly driven knife and a vent-centring pin extending within there, the knife being provided with a substantially circular cutting edge, provided with cutting teeth, which are directed in distal direction and in rotating direction of the knife, and the centring pin being provided on its outer surface with a helical profiling with an engaging surface having a normal with a component opposite to the rotation direction of the knife and a component in proximal direction.

With the device according to the invention a high cutting effectivity is obtained, because the elevations on the centring pin, after having been inserted through the vent opening of the carcass and the inclined oriented cutting edge portions lock up the vent area which lies in between there in opposite horizontal (rotation-)directions.

Preferably the inclined cutting edge portions include, as seen in the projection plane which contains the centre axis of the knife, an angle opening in distal direction of the centre axis, with the helical line, which is larger than 90°. Thus in said arrangement an almost optimal cutting effectivity is obtained which can be further improved if, in accordance with a preferred embodiment of the device according to the invention, said angle is smaller than 135°.

The cutting effectivity can be further improved if, in accordance with an embodiment of the device according to the invention, the rotation driving means for the knife and the rotating driving means for the centring pin are adapted for simultaneous rotation of the knife and the centring pen in mutual opposite rotation directions. The rotation speed of the knife -as already known per se from Dutch patent application 77.002233- can be (much) bigger than the rotation speed of the centring pen.

The invention will now be elucidated on the basis of the examples shown in the attached figures. It is shown in:
figure 1A and 1B, respectively, a side view and a front view of an exemplary embodiment of a unit with vent probe and opener according to the invention;
figure 2 a schematical view of the distal end of an exemplary embodiment of the vent probe according to the invention, during inserting the centring pin in the vent opening of the carcass;
figure 3 the vent probe of figure 2, but now with the centring pin in its place in the vent opening, prior to cutting;
figure 4 the vent probe of figure 2, during cutting the vent opening; and
figure 5 the vent probe of figure 2, after cutting the vent opening, during its removal,
figure 5A an alternative embodiment of the centring pin in the vent probe of figure 2;
figures 6A-6I subsequent stages of cutting out the vent opening and cutting open the vent area with the unit of the figures 1A and 1B; and
figures 7 a detail of the lower portion of the carcass holder of the figures 6A-6I.

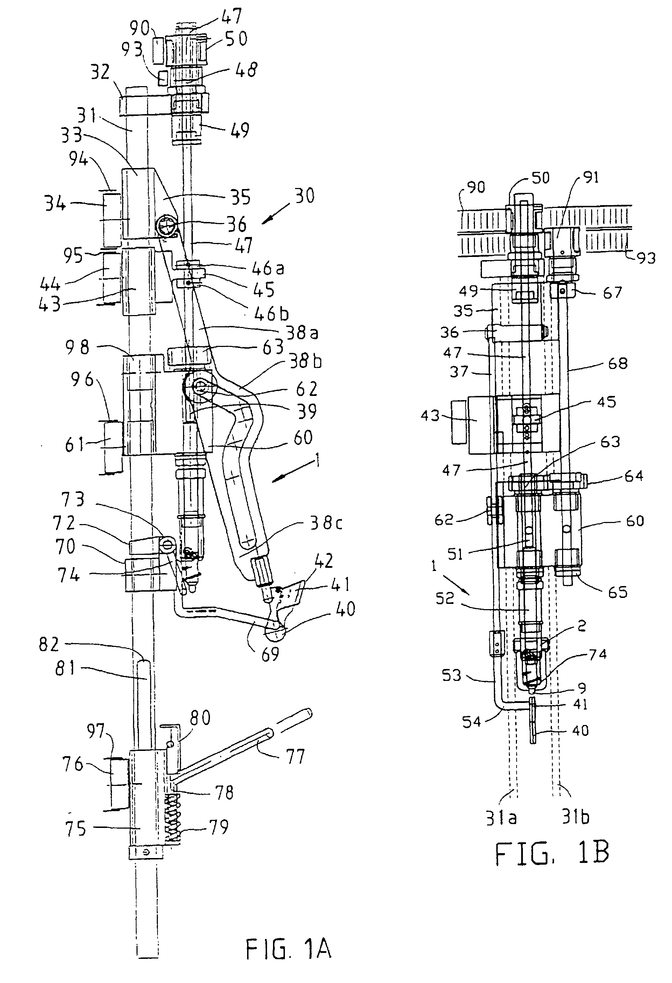

The unit 30 in figures 1A and 1B is part of a series of such units, which are arranged in a round going machine, such as a carousel, known in the art. In a slaughter line usually a plurality of carousels are arranged, each with a series of devices or units intended for a specific, different slaughter treatment. The conveyor on which the carcasses of poultry hung from the legs are moved coincides with section parts with section parts of the carousels. In these coinciding sections the specific treatments are effected, as in this case cutting out the vent and cutting open its surrounding area.

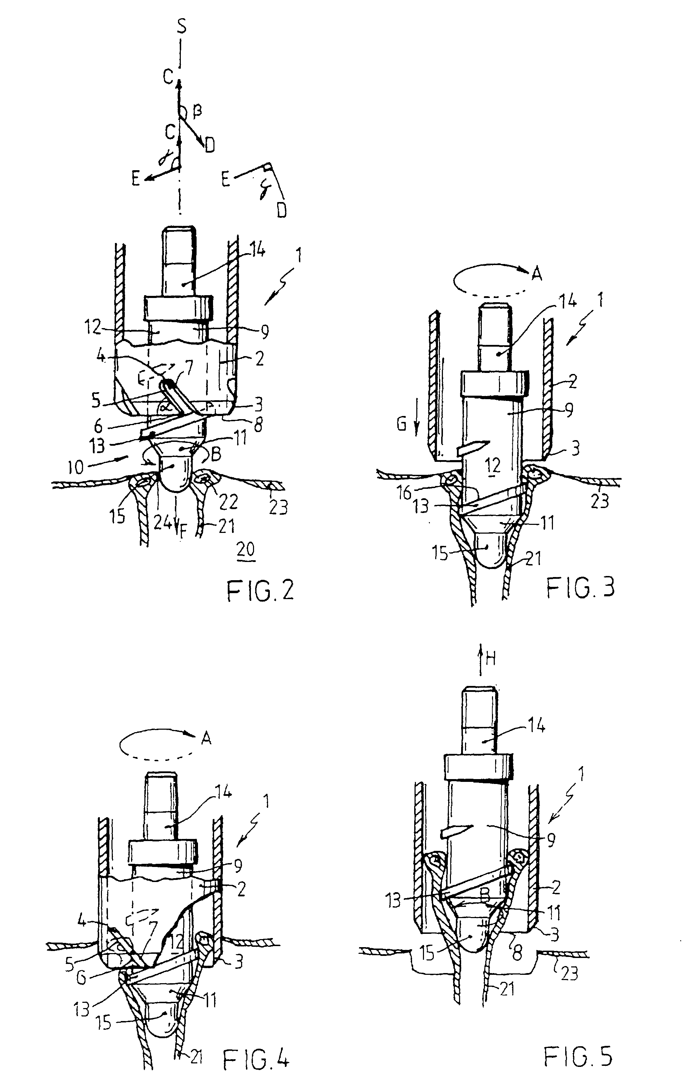

The unit 30, shown in figure 1A and 1B in a fictive position, comprises two vertical rods 31a and 31b, which are held together by among others beam 32. It will be understood that the unit 30 is supported in any suitable way in a carousel which is not shown, to be driven in there in a round going fashion. Below attention is paid only to the special parts of the unit 30. Firstly the vent probe can be mentioned which is showed in detail in the figures 2-5. The vent probe 1 comprises a centring pin 9 and a hollow cylinder knife 2. The centring pen 9 is arranged at the lower end of a rod 47, which near its upper end is borne in bearing bushes 48 and 49, which are attached to beam 32, and at the upper end is slideable and for rotation connected to a drive wheel 50, which is in engagement with a stationary rack 90 on the carousel. The rod 47 is furthermore by means of rings 46a and 46b provided with clamping screws fixedly but detachably attached to holder 45, which forms a whole with sleeve 43, which is upwardly and downwardly slideable along the rods 31a, 31b and is provided with cam roller 44, which is guided in a fixed curve or cam track 94.

Below the holder 45 is a holder block 60, which is provided with passages 98a and 98b for the rods 31a and 31b to be slideable thereon. The block 60 is provided with a cam roller 61, which is guided in a stationary curve or cam track 96. The curve track 96 can advantageously be adjustable to adjust the relative drilling depth of the knife. The block is furthermore provided with a passage for the rod 47, in which the rod 47 can rotate freely. A sleeve 52 is rotatably attached to the lower side of the block 60. To this sleeve 52 the hollow vent cutting knife 2 is fixedly attached. The sleeve 52 is extended to reach through the block 60 up to its upper side, where a pinion 63 is fixed for co-rotation to sleeve 52. The pinion 63 is in engagement with pinion 64, which is fixed for co-rotation to the lower part of a driving rod 68, which by means of bearing sleeve 67 is rotatably borne on beam 32 and at the upper end slideably and connected for rotation to a drive wheel 91, which is in engagement with a stationary rack 93 on the carousel. At the lower end the rod 68 is rotatably borne in bearing 65 on block 60.

As will clearly appear from the discussion of the figures 2-5 the hollow knife 2 and the pin 9 are rotated in opposite direction. This is effected because the rod 47 and with it the pin 9 are rotated in the direction B at movement of the unit 30 in the direction (fig. 1B) as a result of the engagement of the drive wheel 50 by the rack 90, but at the same time the transfer of the rotation movement of the rod 68 in the direction B, caused by the engagement of teethed wheel 91 and rack 93 is changed into an opposite rotation in the direction A, because of the conversion by means of pinions 63 and 64. By suitable choice of diameter of the pinions an optimal relation between the rotation speeds of the knife and pin can be realized.

The unit 30 furthermore comprises means for effecting the slaughtering treatment subsequent to the cutting out of the vent opening, that is to say means for mechanically cutting open the rear or vent area to make the passage of an eviscerator possible at a later stage.

To that end the unit 30 comprises a rod 37, which at the upper end at the location of 36 is hingeably attached to holder 35, which with sleeve 33 is slideable on the rods 31a and 31b. The rod 37 has a straight upper portion 38a, a doubly buckled intermediate portion 38b and a straight lower portion 38c. In the intermediate portion 38b and the lower portion 38c a slot 39 is arranged, in which a cam roller 62 arranged on the side of block 60, is guided. At the lower end the rod 37 changes in an L-shaped rod portion 53, 54, which at the end is provided with a knife clamp 41 with knife 42 clamped in there, and below that a spherical pilot end 40.

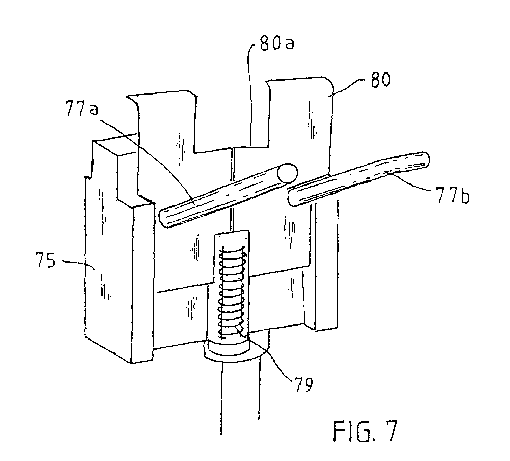

The unit 30 is furthermore provided below with means for holding the carcass held on an overhead conveyor. These means comprise a leg bracket 69, which is attached to the sleeve 70, which is fixedly attached to the rods 31a and 31b. On top of the sleeve 70 at the location of hinge 73 a tail clamping lever 71 is mounted, which clamping lever comprises an operating member 72 and a clamping member 74. Below the leg bracket are leg lifters 77a, 77b, which form a whole with the support 78 which by means of spring 79 and a guiding which is not shown, is spring-biassed onto plastic sleeve block 75, which itself is provided with cam roller 76 for guiding in a curve or cam track 97. The plate 80 is fixedly connected to the sleeve block 75 and therefore directly follows the vertical movement of the cam roller 76. The plate 80 supports the back of the carcass and is turned on the top (see figure 7). In the middle, at the top, the plate 80 is provided with a recess 80a, which extends over the turned portion and a portion of the vertical plate portion to be able to accommodate the tail of the carcass. At the upper end the sleeve 75 is provided with a fixed pin 81 with an operating end 82, which is vertically aligned with the operating member 72 of the lever 71.

In figure 2 the distal portion of the upwardly and downwardly moveable vent probe 1 is shown, in particular the distal end of a circle-cylindrical knife 2 with a vertical centre axis S, and a centring pen 9 coaxially arranged within there, and axially moveable within certain limits in relation to the knife 2. With the help of means not shown but known to the expert, the knife 2 is rotatingly driveable in the direction A, whereas with the help of means not shown but known to the expert the centring pin 9 is rotatingly driveable in the direction B, which is opposite to direction A.

The knife 2 has a distal end portion 3, with a substantially circular cutting edge 8, in which a plurality of inclined notches 4 are made which notches are regularly divided over the circumference. The notches 4 are bounded by cutting edges 5, 7, on all sides, in which cutting edge 5 is directed slantingly in direction A. The cutting edge 5 extends in the direction D, which includes an angle α of 45° with the circular cutting edge 8 and an obtuse angle β with the proximal direction C of the centre axis S, as it is shown above in figure 2. The cutting edge 5 forms sharp cutting teeth 6 with the adjacent cutting edge 8.

The centring pin 9 has a distal end portion 10, with a rounded reduced end 15, a conical ending transitional portion 11 located behind it, and a cylindrical portion 12 located behind it, which is provided with a helical round going rib 13 with rounded sides. More upwards connecting pin 14 is shown, with which centring pin 9 can be connected to a suitable rotation, lowering and lifting means as discussed below. The rib 13 extends slantingly downwards in the direction E and in rotation direction B, which direction E includes an obtuse angle γ with the proximal direction C of the centre axis S. The directions D (of the cutting edge 4) and E (of the rib 13) include in distal direction an angle δ, which is smaller than 135° and larger than 90°, here for example, 110°. The rib 13 is formed as a whole with the centring pin 9 and has engaging surfaces 16 on its proximal side.

In figure 2 the distal end 10 of the centring pen 9 is lowered in the vent opening 24 of the carcass 20 in the direction F', which carcass is not further shown. It will be understood that the carcass 20 is held below the vent probe in the correct position with suitable means -known per se-. Because of the spherical shape of the reduced end 15 the orbicular muscle 22 is gradually forced out, so that the distal end portion 10 of the centring pin 9 easily penetrates the vent opening 24. Further penetration is stimulated by the truncated conical surface 11, after which the orbicular muscle 22 is sufficiently stretched to be engaged in a secure way by rib 13. In doing this the centring pin 9 is slowly rotated in the direction B, because of which, while keeping the centring pin 9 at the same level, the rib 13, in particular its helical engaging surface 16, pulls up in a way comparable to a screw activity, the orbicular muscle 22 which is closely contiguous to the centring pin 9, so that the skin area 23 next to the orbicular muscle 22 is tautened.

Subsequently the knife 2 is moved downwards in the direction G' and in doing that rotatingly driven in the direction A' (figure 3). The cutting edge 9 and the teeth 6 with cutting edge 5 cut through the skin 23, in which the engaging surfaces 16 of rib 13 which are somewhat transverse in relation to the teeth 6, effect a kind of shirring-up effect of the skin on the teeth 17, resulting in a very high cutting effectivity. This is particularly the case when during cutting the centring pin is rotated in the direction B.

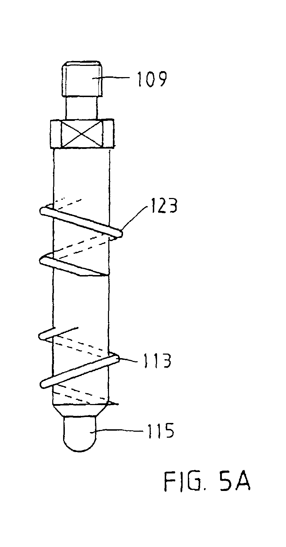

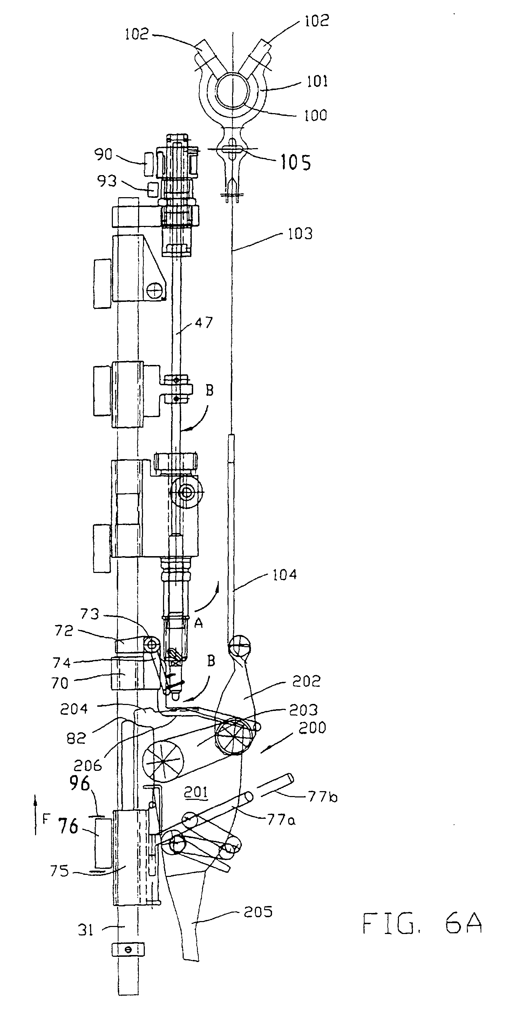

After, as can be seen in figure 4, the skin 23 around the orbicular muscle 22 is cut loose, the vent probe 1 can be withdrawn upwards again, in the direction H, out of the carcass, wherein, as can be seen in figure 5, the orbicular muscle 22 is held between the inner surface of the knife 2, and the outer surface of the cylindrical portion 12 of the centring pin 9 and the engaging surfaces 16 of its rib 13. The centring pin 9 can still be driven somewhat in the direction B. After the vent probe is brought to a distance from the carcass 20 the centring pin 9 is moved somewhat downwards in relation to the knife 2, and if necessary rotated in the direction opposite to the direction B, so that the orbicular muscle 22 can come loose easily from the distal end portion O of the centring pen 9. The vent probe will then -after cleansing- be suitable for a next cycle.

In figure 5A a centring pin 109 is shown which can replace centring pin 9. The centring pin 109 is characterizingly provided with two helical ribs 113 and 123. The special thing about the rib 123 is that the intestine is detained from riding up upwards in proximal direction. After the vent/intestine has been cut loose it will tend to move upwards because of the rotation of the centring pin. This may result in the vent/intestine not or. only with difficulty to come loose from the centring pin at the end of the process. The rib 123 however prevents the vent/intestine from getting too far on the centring pin.

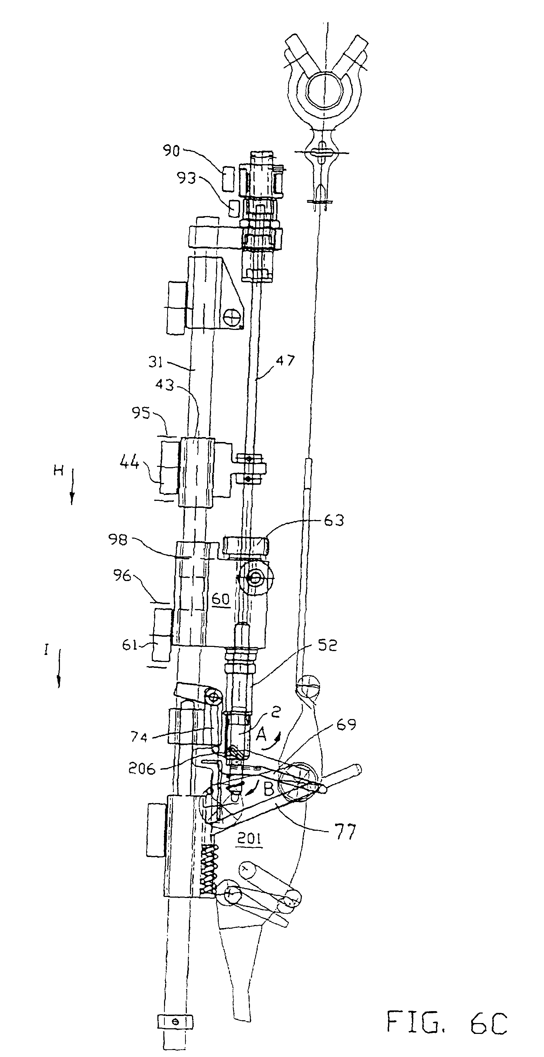

In figure 6A the unit 30 is shown when its section of movement coincides with the section of movement of the overhead conveyor for poultry here constructed from an overhead horizontal tube 100, over which trolleys 101 provided with wheels 102 are moved. The trolleys 101 are connected to each other by means of a driven chain 105. At the lower end of the trolley 101 a suspension wire 103 is attached, on the lower end of which a leg shackle 104 is attached. Two legs 202 of the carcass 200 are hooked in the leg shackle 104.

In the carcass 200 furthermore the main body 201, the neck 205, the thighs 203, the tail 204 and the vent area 206 can be discerned. Joints are indicated by wheel-shaped rounds.

At the merging of the line which is followed by the carcasses 200 and the track of the units 30 the leg bracket 69 engages between the legs 202 and around the vent area 206. In order to keep the caracas 200 firmly in its place during the subsequent treatments sleeve 75 is forced upwards in the direction F by suitable running of the curve track 97, via the cam roller 76. During this movement the leg lifting pens 77a, 77b which are on both sides of the carcass 200, are moved against the thighs 203 to push up the carcass 200 with the vent area 206 within the leg bracket 69. The support 78 (figure 1A) adjusts itself to the size of the carcass, because the leg lifters 77a, 77b can be pushed downwards in relation to the plate 80, against the force of the spring 79. The tail 204 fits into the recess in the plate 80, and is detained in two opposite horizontal directions, parallel to the conveyance direction. Moreover the recess realizes the tail 204 being bent in the right angle by the clamping bracket 74. The spring 79 pushes the legs upwards via the leg lifters 77a, 77b and by that stimulates the holding of the carcass in a (permanently) correct position and level.

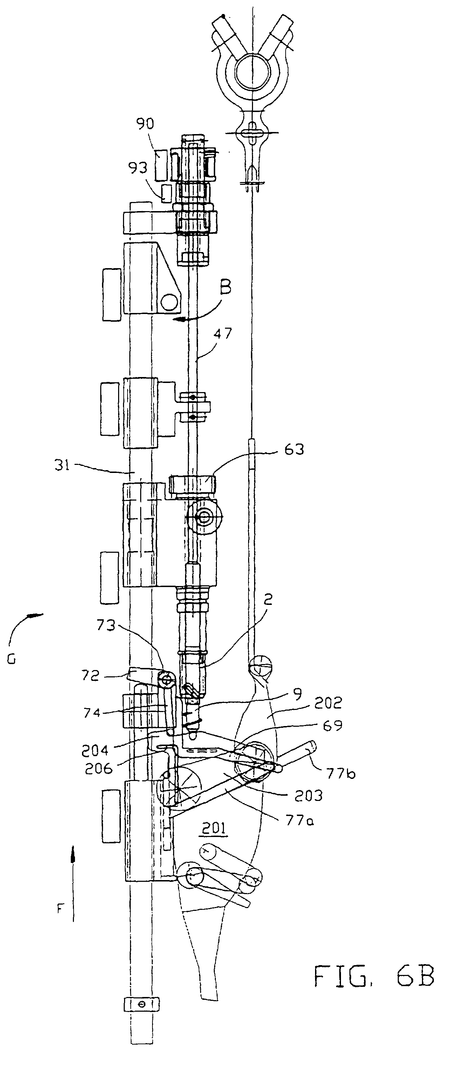

At the same time the operating end 82 of the fixed pin 81 on the sleeve 75 abuts the operating member 72, because of which it is pushed upwards and pivots on hinge 73, resulting in the clamping member 74 being turned to the right around 6. The clamping member 74 engages the tail to push it to the left and detaining it against the movement from the right, to the fore. Then the situation shown in figure 6B is obtained, in which the vent area is firmly detained and is taut.

In the carousel the unit 30 has then arrived at the brackets 90 and 93. Because of the interengagement of the drive sprocket 50 and the rack 90 the rod 47 is rotated in the direction B, and with that also its lower end, the centring pin 9. Because of the interengagement of the drive wheel 91 and the rack 93 the rod 68 (not shown here, but see figure 1B) is also rotated in the direction B, but the sleeve 52 and with that the hollow knife 2 are rotated via transfer between the teethed wheels 62, 63 in opposite direction A indeed, but a little faster than the centring pen.

Because of a suitable course of the curve tracks 95 and 96 and the guiding in it of the cam rollers 44, 61 respectively, the sleeve 43 and the block 60 will be moved downwards in the directions H and I respectively. The rods 67 and 68 go down in relation to the drive wheels 50 and 91, but remain, be it indirectly, connected with them for rotating movement. The centring pin or probe 9, which runs ahead of the knife 2, rotates itself in the vent, and a little later the hollow knife 2 cuts off the skin around the vent, as already explained above in the description of the figures 2-5. The sexual gland is within the area that is cut away and as a result is also taken away. Because the tail 204 is detained (with the help of bracket 74) the sexual gland can be removed in the correct manner.

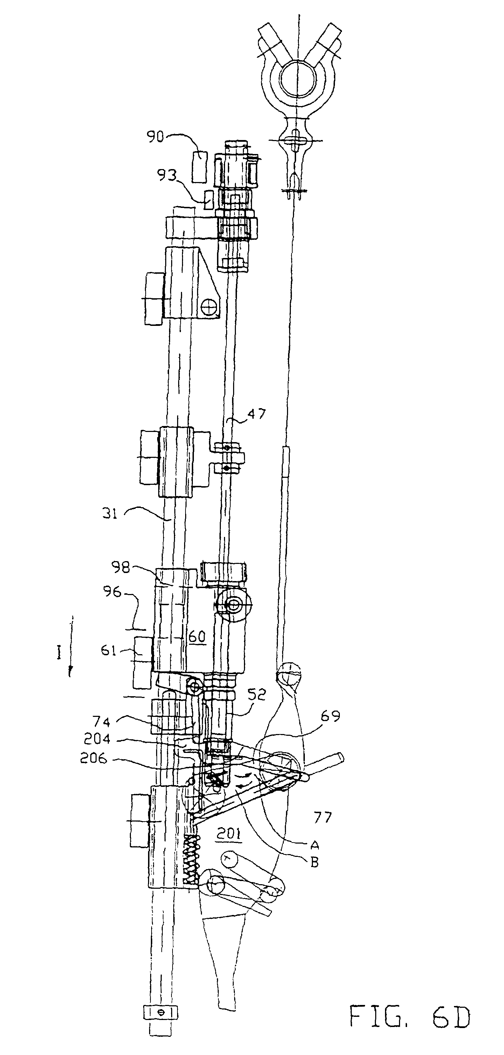

In figure 6D the sleeve 43 has stopped but the block 60 still moves further downwards. In this way the hollow knife 2 descends in relation to the centring pin 9, so that the vent is clamped between the centring pin 9 and the knife 2. Both keep being rotated in opposite directions.

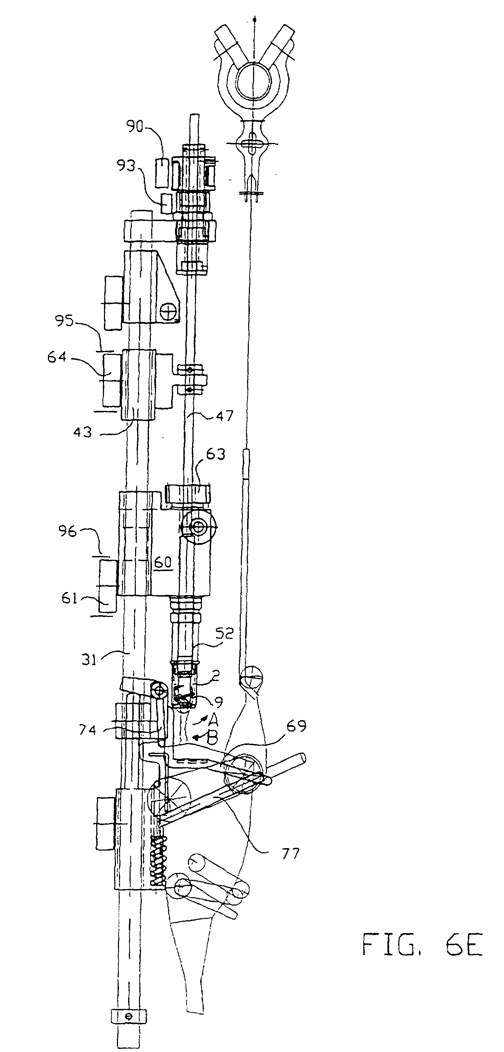

In the situation shown in figure 6E, it is subsequently effected because of suitable design of the curve tracks 95, 95 respectively that the sleeve 43 and the block 60 are moved upwards in the directions K and J respectively. Now as well the centring pin 9 and the hollow knife 2 remain in opposite rotation, and the vent is pulled along upwards. Arrived at some height,above the vent area 206 the rotation of the centring pin 9 and the knife 2 is stopped by ending of the racks 90 and 93. Then the next treatment member of the unit 30 is brought into action. Meant here is the tool for opening the vent area 206, which opening should take place to make a sufficiently large passage for the eviscerator which in a later stage eviscerates the carcass.

As schematically shown in figure 1B the knife 42 and the spherical pilot end 40 are at that moment just below the centring pin 9 and the hollow knife, but the means for holding it extend to the side with L-shaped rod 54, 53 to extend upwards with the rod 37 parallel and next to the rod 47 to the hinge attachment 36.

Because of cooperation between the cam roller 62 and the slot 39, in particular the slot portion 39a, which realizes an outwardly swung position to the outside of the rod 37, during the treatment of cutting out the vent discussed in the preceding it is guaranteed that the remaining parts 40-42 do not hinder that treatment. The parts 40-42 will be somewhat in front of the vertical working path of the hollow knife 2/ centring pin 9.

When the block 60 moves upwards the cam roller 62 will end up in the inclined slot portion 39b. The opener parts 40-42 will then be moved inwardly underneath the vent probe according to a curved path.

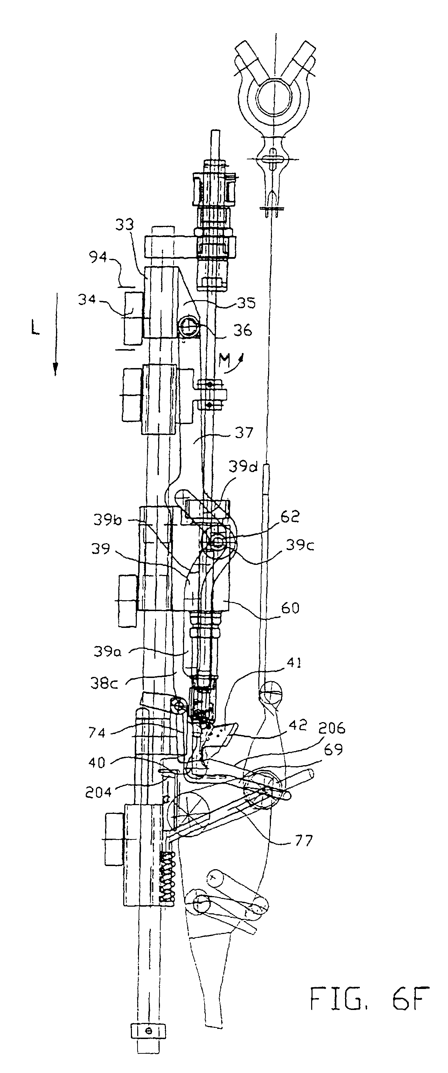

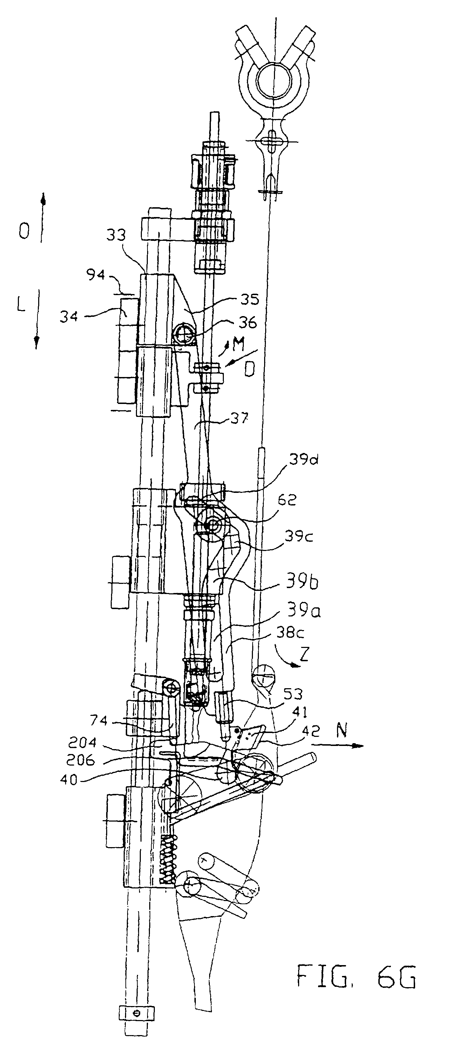

In the situation shown in figure 6F the cam roller 62 is in the transition portion 39c with short vertical section of the slot 39. Because of suitable design of the curve track 94 and the guiding within there of the cam roller 34 the holder 35 is moved downwards in the direction L, and the same happens to the hinge connection 36 and with that with the rod 37. The block 60 is kept at a constant height, because of which the cam roller 62 will relatively move in the slot 39, that is in the short slot portion 39c. In this way the opener is first moved vertically downwards until in the hole made by the vent probe. Subsequently the roller 62 moves in the slot portion 39d. Thereby a tilting moment M (see figure 6G) is exerted on the rod 37. The effect is that the opener parts 40-42 make a curved movement Z, so they are not only moved further downwards but also make a movement to the outside. The knife 42 reaches the level of the boundary of the opening cut out by the vent probe and will by tilting of the rod 37 be forced to the fore in the direction N to effect a cutting activity which approximately ends near the breast point of the carcass, as shown in figure 6G. During this movement of the knife 42 with component in the direction Z/N it is prevented that the knife cuts through the package of intestines present in the carcass and tail clamping part 74 ensures that the tail remains in its place and the skin and the meat is kept taut during cutting. In this way the cutting can take place in a reliable and fast manner.

Because the vent probe 1 holds the orbicular muscle 22 and the intestine 21 more or less stretched the positioning and the operation of the opener is hardly hindered. Moreover the carcass and the entrance opening for the opener are already centred in relation to the opener.

Subsequently, because of suitable course of the curve track 94 it is realized that the holder 35 is moved somewhat upwards, whereas the block 60 is kept at a constant level so that cam roller 62 is relatively going down in the slot 39 and the rod 37 will rotate back somewhat in the direction P about the hinge connection 36. Because of this the knife 42 will move somewhat back to the back side.

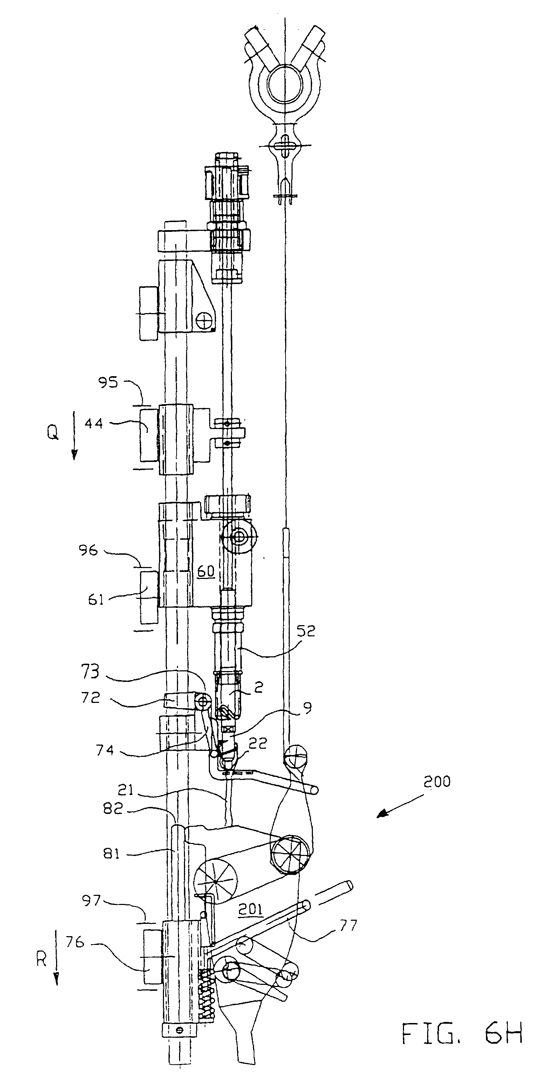

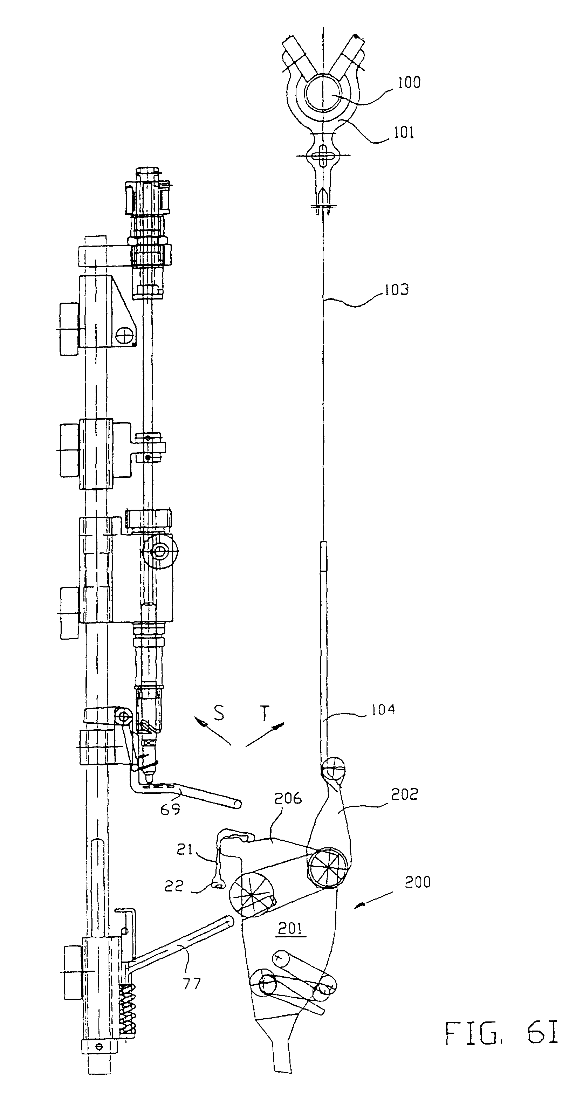

After completion of the opening of the vent area, the treatment intended with this machine is finished and the actions necessary to free the unit 30 of the carcass 200 follow. To this end by suitable design of the curve tracks 95 the sleeve 43 is forced downwards in the direction Q, whereas the block 60 is kept at a constant level. In this way the centring pin 9 moves downwards out of the hollow knife 2, so that the vent is no longer kept clamped on the pin. Because of a suitable design of the curve tracks 97 it is also realized that the sleeve 75 with leg lifter pens 77a, 77b is moved downwards in the direction R. In this way the operating end 82 comes loose from the operating member 72, because of which the clamping member 74 no longer exerts a clamping action on the tail 204. The carcass is no longer supported in the vertical sense in the unit 30 and will because of that hang freely again on the overhead conveyor (see figure 6H). For reasons of clarity the opener has been left out here.

Subsequently one arrives at the point where the track followed by the units, the track S, diverges from the track followed by the overhead conveyor, the track T. As can be seen in figure 6I, the horizontal distance between the carcass 200 and the unit 30 is enlarged, because of which the vent 22, which remains connected to the carcass via the intestine 21, can be pulled of the centring pin 9. The intestine 21 and the vent 22 will drop as by itself over the tail area in order to hang on the back side of the carcass 200.

## Claims

1. Device (1) for cutting out the vent of the carcass of poultry during a slaughtering process, comprising a hollow cylindrical knife (2) having a cutting edge (8) at its distal end, a vent centring pin (9) arranged within there, and extending parallel to the centre axis (S) of the knife, means (63, 64, 91, 93) for rotatingly driving the knife and means (50, 90) for rotatingly driving the centring pin, said centring pin (9) being provided with elevations (13) protruding from its surface, having engaging surfaces (16) which are arranged in helical line, which helical line includes an obtuse angle (γ) opening in a rotation direction with the proximal direction component (C) of the centre axis (S) of the knife, as seen in the projection plane **characterized in that** the cutting edge (8) of the knife has inclined cutting edge portions (5), which include an obtuse angle (β) opening in the rotation direction of the knife, with the proximal direction component (C) of the centre axis (S) of the knife, as seen in a projection plane which contains the centre axis of the knife, wherein the obtuse angle of the helical line is opposite to that of the knife.

2. Device according to claim 1, in which the inclined cutting edge portions (5) are part of notches (4) in an otherwise circular cutting edge (8).

3. Device according to claim 1 or 2, the elevations (13) having the shape of one or a plurality of helical ribs.

4. Device according to claim 3, the engaging surfaces (16) being bounded by sharp edges.

5. Device according to any one of the claims 1-4, in which, as seen in the projection plane, the inclined cutting edge portions (5) include an angle (δ) opening in proximal direction (C) of the centre axis of the knife, with the helical line (E), which is larger than 90° and preferably smaller than 135°.

6. Device according to any one of the preceding claims, the obtuse angle (β) of the inclined cutting edge portions (5) being approximately 135°.

7. Device according to any one of the preceding claims, the rotation driving means (63, 64, 91, 93) for the knife (2) and the rotation driving means (50, 90) for the centring pin (9) being adapted for simultaneous rotation of the knife and the centring pen in mutual opposite rotation directions, the rotation driving means for the knife and the rotation driving means for the centring pin being preferably adapted for rotating the knife relatively fast and rotating the centring pin relatively slow in the opposite direction respectively.

8. Device according to any one of the preceding claims, the centring pin (9) being provided with a reduced distal end (15), which preferably in proximal direction passes through a preferably truncated conical transitional area (11) onto a cylindrical portion (12) with enlarged diameter, which is provided with the elevations (13).

9. Device according to any one of the preceding claims, the knife (2) and the centring pin (9) being arranged for mutual axial displacement.

10. Device according to any one of the preceding claims, the centring pen (109) proximally from the elevations (113) being provided with means (123) for detaining the vent/orbicular muscle/intestine against proximal movement on the centring pin.

11. Device according to claim 10, the detaining means (123) forming an additional elevation on the centring pin, preferably with engaging surfaces arranged along a helical line, preferably in the shape of a helical rib.

12. Device according to claim 11, the helical line (123) having a winding direction which is opposite to the one of the distally situated elevations (113).

13. Device (1) for cutting out the vent of the carcass of poultry during a slaughtering process, comprising a hollow cylindrical, rotatingly driven knife (2) and a vent-centring pen (9) extending within there, the knife (2) being provided with a substantially circular cutting edge (8) the centring pen (9) being provided on its outer surface with a helical profiling (13) with an engaging surface (16), **characterized in that** the cutting edge is provided with cutting teeth (6), which are directed in distal direction and in rotation direction of the knife, and **in that** the engaging surface has a normal with a component opposite to the rotation direction of the knife and a component in proximal direction.

14. Unit (30) for cutting out the vent of the carcasses of poultry during a slaughtering process, comprising a device (1) according to any one of the preceding claims and means (45) for holding the carcass.

15. Apparatus for cutting out the vent of the carcasses of poultry during a slaughtering process, comprising a series of units (30) according to claim 14 which are arranged for being driven along a round going path.

16. Processing line for carcasses of poultry, comprising an apparatus according to claim 15 and an overhead conveyor for conveying the carcasses along said apparatus.

## Patentansprüche

1. Vorrichtung (1) zum Herausschneiden des Afters aus der Geflügelkarkasse während einem Schlachtverfahren, umfassend ein hohles zylindrisches Messer (2) mit an seinem distalen Ende einer Schnittkante (8), einen darin angeordneten, sich parallel zu der Herzlinie (S) des Messers erstreckenden Afterzentrierstift (9), Mittel (63, 64, 91, 93) zum rotierend Antreiben des Messers und Mittel (50, 90) zum rotierend Antreiben des Zentrierstiftes, wobei der Zentrierstift (9) mit von der Oberfläche davon herausragenden Erhebungen (13) versehen ist, mit in Schraubenlinie aufgestellten Angriffsflächen (16), welche Schraubenlinie einen, in Rotationsrichtung mit dem proximalen Richtungskomponent (C) der Herzlinie (S) des Messers öffnenden stumpfen Winkel (γ) einschließt, in der Projektionsfläche betrachtet, **dadurch gekennzeichnet, daß** die Schnittkante (8) des Messers schräge Schnittkantenteile (5) hat, die einen, 'in Rotationsrichtung mit dem proximalen Richtungskomponent (C) der Herzlinie (S) des Messers öffnenden stumpfen Winkel (β) einschließen, in einer Projektionsfläche betrachtet, umfassend die Herzlinie des Messers, worin der stumpfe Winkel der Schraubenlinie dem des Messers entgegengesetzt ist.

2. Vorrichtung nach Anspruch 1, wobei die schrägen Schnittkantenteile (5) zu den Kerben (4) in einer sonst kreisförmigen Schnittkante (8) gehören.

3. Vorrichtung nach Anspruch 1 oder 2, wobei die Erhebungen (13) die Form einer oder mehrerer Schraubenlinienrippen haben.

4. Vorrichtung nach Anspruch 3, wobei die Angriffsflächen (16) durch scharfe Kanten begrenzt sind.

5. Vorrichtung nach einem der Ansprüche 1-4, wobei, in der Projektionsfläche betrachtet, die schrägen Schnittkantenteile (5) einen in Proximalrichtung (C) der Herzlinie des Messers öffnenden Winkel (δ) mit der Schraubenlinie (E) einschließen, welcher größer als 90° und vorzugsweise kleiner als 135° ist.

6. Vorrichtung nach einem der vorhergehenden Ansprüche, wobei der stumpfe Winkel β von den schrägen Schnittkantenteilen (5) ungefähr 135° ist.

7. Vorrichtung nach einem der vorhergehenden Ansprüche, wobei die Rotationsantriebsmittel (63, 64, 91, 93) für das Messer (2) und die Rotationsantriebsmittel (50, 90) für den Zentrierstift (9) für gleichzeitige Rotation des Messers und des Zentrierstiftes in gegenseitig entgegengesetzten Rotationsrichtungen angepasst sind, wobei die Rotationsantriebsmittel für das Messer und die Rotationsantriebsmittel für den Zentrierstift vorzugsweise beziehungsweise für das relativ schnell rotieren lassen des Messers und das relativ langsam in entgegengesetzter Richtung rotieren lassen des Zentrierstiftes angepasst sind.

8. Vorrichtung nach einem der vorhergehenden Ansprüche, wobei der Zentrierstift (9) mit einem verjüngten distalen Ende (15) versehen ist, welches vorzugsweise in Proximalrichtung via ein vorzugsweise abgestumpftes kegelförmiges Übergangsgebiet (11) in einen zylindrischen Abschnitt (12) mit vergrößertem Diameter übergeht, welcher mit Erhebungen (13) versehen ist.

9. Vorrichtung nach einem der vorhergehenden Ansprüche, wobei das Messer (2) und der Zentrierstift (9) für gegenseitige axiale Versetzung angeordnet sind.

10. Vorrichtung nach einem der vorhergehenden Ansprüche, wobei der Zentrierstift (109) proximal von den Erhebungen (13) mit Mitteln (123) zum Zurückhalten des Afters/Kringmuskels/Darms von proximaler Bewegung des Zentrierstiftes versehen ist.

11. Vorrichtung nach Anspruch 10, wobei die Zurückhaltmittel (123) eine zusätzliche Erhebung auf dem Zentrierstift bilden, vorzugsweise mit entlang einer Schraubenlinie angeordneten Angriffsflächen, vorzugsweise in der Form einer Schraubenlinienrippe.

12. Vorrichtung nach Anspruch 11, wobei die Schraubenlinie (123) eine Wicklungsrichtung hat, die der der distal gelegenen Erhebungen (113) entgegengesetzt ist.

13. Vorrichtung (1) zum Herausschneiden des Afters aus der Geflügelkarkasse während einem Schlachtverfahren, umfassend ein hohles zylindrisches, drehbar, angetriebenes Messer (2) und einen sich darin erstreckenden Afterzentrierstift (9), wobei das Messer (2) mit einer hauptsächlich kreisförmigen Schnittkannte (8) versehen ist, wobei der Zentrierstift (9) an seiner Außenfläche mit einer Schraubenlinienprofilierung (13) mit einer Angriffsfläche (16) versehen ist, **dadurch gekennzeichnet, daß** die Schnittkante mit Schneidzähnen (6) versehen ist, die in distale Richtung und in Rotationsrichtung des Messers gerichtet sind, und daß die Angriffsfläche eine Normale hat mit einem Komponent der Rotationsrichtung des Messers entgegengesetzt und einem Komponenten in proximale Richtung.

14. Einheit (3) zum Herausschneiden des Afters aus den Geflügelkarkassen während einem Schlachtverfahren, umfassend eine Vorrichtung (1) nach einem der vorhergehenden Ansprüche und Mittel (45) zum Festhalten der Karkasse.

15. Gerät zum Herausschneiden des Afters aus den Geflügelkarkassen während einem Schlachtverfahren, umfassend eine Serie Einheiten (30) nach Anspruch 14, die angeordnet sind um entlang einem rundgehenden Pfad angetrieben zu werden.

16. Verarbeitungsband für Geflügelkarkassen, umfassend ein Gerät nach Anspruch 15 und ein Deckentransportband zum Transportieren der Karkasse entlang dem Gerät.

## Revendications

1. Dispositif (1) pour enlever l'anus de la carcasse de volailles durant un procédé d'abattage, comprenant un couteau cylindrique creux (2) ayant un bord coupant (8) à son extrémité distale, une broche de centrage d'anus (9) arrangée à l'intérieur de celui-ci et s'étendant parallèlement à l'axe central (S) du couteau, des moyens (63, 64, 91, 93) pour mettre le couteau en rotation, et des moyens (50, 90) pour mettre la broche de centrage en rotation, ladite broche de centrage (9) étant pourvue de saillies (13) sortant de sa surface et présentant des surfaces d'engagement (16) arrangées en une ligne hélicoïdale, ladite ligne hélicoïdale comprenant un angle obtus ( ) s'ouvrant dans une direction de rotation avec la composante de direction proximale (C) de l'axe central (S) du couteau, comme on peut le voir dans le plan de projection, **caractérisé en ce que** le bord coupant (8) du couteau présente des parties de bord coupant inclinées (5) comprenant un ange obtus ( ) s'ouvrant dans la direction de rotation du couteau avec la composante de direction proximale (C) de l'axe central (S) du couteau, comme on peut le voir dans le plan de projection qui contient l'axe central du couteau, dans lequel l'angle obtus de la ligne hélicoïdale est opposé à celui du couteau.

2. Dispositif suivant la revendication 1, dans lequel les parties de bord coupant inclinées (5) sont des parties d'encoches (4) dans un bord coupant par ailleurs circulaire (8).

3. Dispositif suivant la revendication 1 ou 2, dans lequel les saillies (13) ont la forme d'une ou d'une pluralité de nervure(s) hélicoïdale(s).

4. Dispositif suivant la revendication 3, dans lequel les surfaces d'engagement (16) sont limitées par des bords tranchants.

5. Dispositif suivant l'une quelconque des revendications 1 à 4, dans lequel, comme on peut le voir dans le plan de projection, les parties de bord coupant inclinées (5) comprennent un angle (δ) s'ouvrant dans la direction proximale (C) de l'axe central du couteau avec la ligne hélicoïdale (E), qui est supérieur à 90° et de préférence inférieur à 135°.

6. Dispositif suivant l'une quelconque des revendications précédentes, dans lequel l'angle obtus ( ) des parties de bord coupant inclinées (5) est approximativement égal à 135°.

7. Dispositif suivant l'une quelconque des revendications précédentes, dans lequel les moyens de mise en rotation (63, 64, 91, 93) du couteau (2) et les moyens de mise en rotation (50, 90) de la broche de centrage (9) sont aptes à mettre en rotation d'une façon simultanée le couteau et la broche de centrage dans des directions de rotation mutuelles opposées, les moyens de mise en rotation du couteau et les moyens de mise en rotation de la broche de centrage étant de préférence aptes à faire tourner le couteau relativement rapidement et à faire tourner la broche de centrage relativement lentement dans la direction opposée, respectivement.

8. Dispositif suivant l'une quelconque des revendications précédentes, dans lequel la broche de centrage (9) présente une extrémité distale réduite (15), qui passe de préférence dans la direction proximale à travers une région de transition de préférence tronconique (11) à une partie cylindrique (12) de plus grand diamètre, qui est pourvue des saillies (13).

9. Dispositif suivant l'une quelconque des revendications précédentes, dans lequel le couteau (2) et la broche de centrage (9) sont arrangés pour un déplacement axial mutuel.

10. Dispositif suivant l'une quelconque des revendications précédentes, dans lequel la broche de centrage (109) aux positions proximales à partir des saillies (113) est pourvue de moyens (123) pour retenir l'anus/le muscle orbiculaire/les intestins contre un mouvement proximal sur la broche de centrage.

11. Dispositif suivant la revendication 10, dans lequel les moyens de retenue (123) forment une saillie supplémentaire sur la broche de centrage, de préférence avec des surfaces d'engagement arrangées le long d'une ligne hélicoïdale, de préférence ayant la forme d'une nervure hélicoïdale.

12. Dispositif suivant la revendication 11, dans lequel la ligne hélicoïdale (123) a une direction d'enroulement qui est opposée à celle des saillies distales (113).

13. Dispositif (1) pour enlever l'anus de la carcasse de volailles durant un procédé d'abattage, comprenant un couteau rotatif cylindrique creux (2) et une broche de centrage d'anus (9) s'étendant à l'intérieur de celui-ci, le couteau (2) étant pourvu d'un bord de coupe substantiellement circulaire (8), la broche de centrage (9) étant pourvue sur sa surface extérieure d'un profilage hélicoïdal (13) présentant une surface d'engagement, **caractérisé en ce que** le bord de coupe est pourvu de dents de coupe (6) orientées dans la direction distale et dans la direction de rotation du couteau, et **en ce que** la surface d'engagement présente une normale comportant une composante opposée à la direction de rotation du couteau et une composante orientée dans la direction proximale.

14. Unité (30) pour enlever l'anus de la carcasse de volailles durant un procédé d'abattage, comprenant un dispositif (1) suivant l'une quelconque des revendications précédentes, et des moyens (45) pour maintenir la carcasse.

15. Appareil pour enlever l'anus de la carcasse de volailles durant un procédé d'abattage, comprenant une série d'unités (30) suivant la revendication 14 arrangées pour être entraînées le long d'un chemin d'abattage circulaire.

16. Ligne de traitement pour des carcasses de volaille, comprenant un appareil suivant la revendication 15 et un convoyeur aérien pour transporter les carcasses le long dudit appareil.
